(19) Europäisches Patentamt / European Patent Office / Office européen des brevets

(11) **EP 3 621 037 B1**

(12) **EUROPEAN PATENT SPECIFICATION**

(45) Date of publication and mention
of the grant of the patent:
**22.09.2021 Bulletin 2021/38**

(51) Int Cl.:
*G06T 7/80* (2017.01)        *B60R 1/00* (2006.01)
*G01S 13/931* (2020.01)        *G01B 11/27* (2006.01)
*G01S 7/40* (2006.01)

(21) Application number: **19187862.8**

(22) Date of filing: **23.07.2019**

(54) **SYSTEM AND METHOD FOR CALIBRATING ADVANCED DRIVER ASSISTANCE SYSTEM BASED ON VEHICLE POSITIONING**

SYSTEM UND VERFAHREN ZUM KALIBRIEREN EINES ERWEITERTEN FAHRERASSISTENZSYSTEMS AUF BASIS DER FAHRZEUGPOSITIONIERUNG

SYSTÈME ET PROCÉDÉ D'ÉTALONNAGE D'UN SYSTÈME AVANCÉ D'ASSISTANCE AU CONDUCTEUR À BASE DE POSITIONNEMENT DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2018 CN 201811046083**

(43) Date of publication of application:
**11.03.2020 Bulletin 2020/11**

(73) Proprietor: **Shenzhen Dongzhi Technology Development Co., Ltd.**
**Shenzhen, Guangdong 518000 (CN)**

(72) Inventors:
• **LI, Baodong**
**Shenzhen, Guangdong 518000 (CN)**
• **CAO, Liu**
**Shenzhen, Guangdong 518000 (CN)**
• **XIE, Fangzhi**
**Shenzhen, Guangdong 518000 (CN)**
• **CHEN, Shaowen**
**Shenzhen, Guangdong 518000 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**US-A1- 2010 238 291     US-A1- 2010 318 307**
**US-B2- 9 279 670**

EP 3 621 037 B1

**Description**

TECHNICAL FIELD

The present application relates to the technical field of the calibration of advanced driver assistance system, and in particular to a system and a method for calibrating an advanced driver assistance system based on vehicle positioning.

BACKGROUND

During the car driving, Advanced Driver Assistance System (ADAS) uses a variety of sensors installed in a car to sense surrounding environment, collect data, identify, detect and track static and dynamic objects, and perform systematic calculation and analysis in combination with navigation map data, so as to enable the driver to pre-detect the danger that may occur, which effectively increase the comfort and safety of car driving. A method as well as device for determining the position and alignment of a camera of a driver-assistance system of a vehicle relative to the vehicle is known from US 2010238291 A1, a method and device for calibrating and adjusting a vehicle surroundings sensor is known from US 9279670 B2.

In order to ensure the normal use of ADAS, ADAS needs to be calibrated before leaving the factory. Before the calibration of ADAS, ADAS sensors of the vehicle need to be positioned, so as to complete the vehicle calibration after positioning.

SUMMARY

In view of the foregoing, embodiments of the present application provide a system and a method for calibrating an advanced driver assistance system based on vehicle positioning to position the ADAS sensor of a vehicle.

A first aspect of the invention provides a system for calibrating an advanced driver assistance system based on vehicle positioning, as defined in claim 1.

A second aspect of the invention provides a method for calibrating an advanced driver assistance system, as defined in claim 9.

Compared with the prior art, the beneficial effects of the embodiments of the present application are:

Embodiments of the present application provide a system and a method for calibrating an advanced driver assistance system based on vehicle positioning. Firstly, an advanced driver assistance system calibration target, a rail mechanism for the advanced driver assistance system calibration target, an auxiliary positioning target, a control device and an industrial camera are constructed. In the calibration stage of the advanced driver assistance system, the vehicle is driven into a station to allow the front wheel of the vehicle to reach a designated front position; the control device controls the industrial camera to take a picture of the auxiliary positioning target to obtain a first spatial transformation matrix representing the coordinate transformation from the position of the industrial camera to the position of the auxiliary positioning target, so as to determine a fourth spatial transformation matrix representing the coordinate transformation from the position of the advanced driver assistance system sensor of the vehicle to the position of the advanced driver assistance system calibration target according to a plurality of spatial position transformation matrices, thereby realizing the calibration of the vehicle spatial position, that is, the vehicle positioning is realized.

BRIEF DESCRIPTION OF THE DRAWINGS

In order to more clearly illustrate the technical solution in the embodiments of the present application, the following drawings, which are to be used in the description of the embodiments or the prior art, will be briefly described. It is obvious that the drawings described hereinafter are merely some embodiments of the present application. The scope of the invention and its embodiments is defined by the appended claims.

FIG. 1 is a schematic view showing the combination of a system 100 for calibrating an advanced driver assistance system based on vehicle positioning according to embodiment one of the present application;

FIG. 2 is a schematic view showing an application scenario of a system 100 for calibrating an advanced driver assistance system based on vehicle positioning according to embodiment one of the present application;

FIG. 3 is a schematic view showing a left-to-right offset of a vehicle according to embodiment one of the present application; and

FIG. 4 is a schematic view showing an implementation flow of a method for calibrating an advanced driver assistance system based on vehicle positioning according to embodiment two of the present application.

DETAILTED DESCRIPTION

In order to make the objects, technical solutions, and advantages of the present application more clear, the present application will be further described in detail hereinafter with reference to the accompanying drawings and embodiments. It should be understood that the specific embodiments described herein are merely intended to explain the present application rather than to limit the present application. The scope of the invention and its embodiments is defined by the appended claims.

Embodiment one

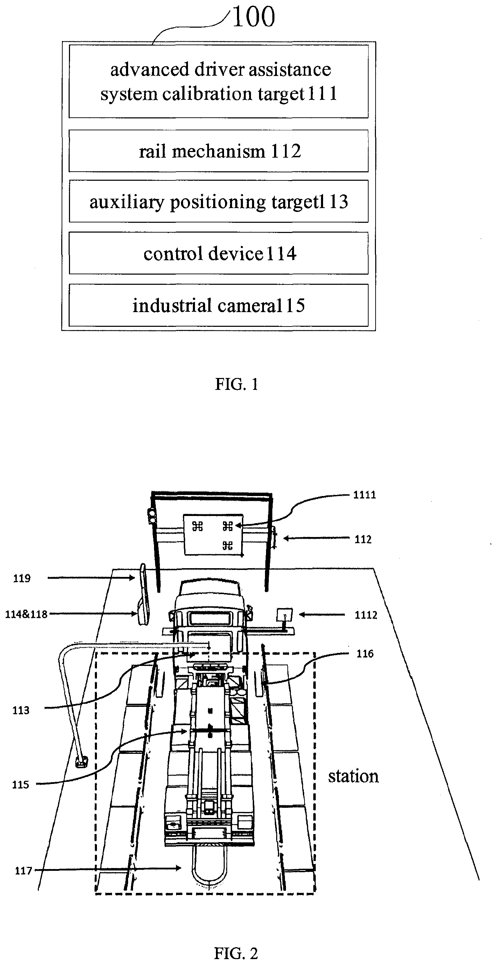

FIG. 1 and FIG. 2 illustrate a system 100 for calibrating an advanced driver assistance system based on vehicle positioning provided by an embodiment of the present application, including:

an advanced driver assistance system calibration target 111, a rail mechanism 112 for the advanced driver assistance system calibration target 111, an auxiliary positioning target 113, a control device 114, and an industrial camera 115.

The advanced driver assistance system calibration target 111 is configured for correcting an advanced driver assistance system sensor of a vehicle; the rail mechanism 112 is configured for controlling a translational movement and a rotational movement of the advanced driver assistance system calibration target 111; the auxiliary positioning target 113 is configured for assisting in calibrating a position of the advanced driver assistance system sensor; the control device 114 is configured for controlling operation of the system 100; the industrial camera 115 is configured for photographing the auxiliary positioning target

In a calibration stage of the advanced driver assistance system, the vehicle is driven into a station to allow a front wheel of the vehicle to reach a designated position in front of a vehicle tire measuring grating 116 ; the control device 114 is configured to control the industrial camera 115 to take a picture of the auxiliary positioning target 113 to obtain a first spatial transformation matrix representing the coordinate transformation from the position of the industrial camera 115 to the position of the auxiliary positioning target 113, so as to determine a fourth spatial transformation matrix representing the coordinate transformation from the position of the advanced driver assistance system sensor of the vehicle to the position of the advanced driver assistance system calibration target 111 according to the first spatial transformation matrix, a second spatial transformation matrix representing the coordinate transformation from the position of the auxiliary positioning target 113 to the position of the advanced driver assistance system calibration target 111, and a third spatial transformation matrix representing the coordinate transformation from the position of the advanced driver assistance system sensor of the vehicle to the position of the industrial camera 115.

For the above system 100, firstly, the advanced driver assistance system calibration target 111, the rail mechanism 112 for the advanced driver assistance system calibration target 111, the auxiliary positioning target 113, the control device 114, and an industrial camera 115 are constructed. In the calibration stage of the advanced driver assistance system, the vehicle is driven into a station to allow a front wheel of the vehicle to reach a designated front position; the control device 114 is configured to control the industrial camera 115 to take a picture of the auxiliary positioning target 113 to obtain the first spatial transformation matrix representing the coordinate transformation from the position of the industrial camera 115 to the position of the auxiliary positioning target 113, so as to determine the fourth spatial transformation matrix representing the coordinate transformation from the position of the advanced driver assistance system sensor of the vehicle to the position of the advanced driver assistance system calibration target 111 according to a plurality of spatial position transformation matrices, thereby realizing the calibration of the vehicle spatial position, that is, the vehicle positioning is realized, so that the vehicle and the target can be directly aligned by moving the target subsequently.

During the car driving, the advanced driver assistance system uses a variety of sensors installed in the vehicle to sense surrounding environment, collect data, identify, detect, and track static and dynamic objects, and perform systematic calculation and analysis in combination with navigation map data, so as to enable the driver to pre-detect the danger that may occur, which effectively increase the comfort and safety of vehicle driving.

The advanced driver assistance system may include, but be not limited to, a lane departure warning system (LDWS), an adaptive cruise control system (ACCS), a lane keeping system, an automatic headlight, a driver fatigue detecting system, and traffic sign recognition system.

The lane departure warning system is configured to alert the driver by sending a warning signal when the vehicle deviates from the lane mark or deviates from the lane mark by a predetermined distance. The adaptive cruise control system can detect the distance between the vehicle and an obstacle (such as a preceding vehicle), when the distance between the vehicle and an obstacle is too small, by operating in cooperation with the anti-lock braking system and the engine control system, the adaptive cruise control system can properly brake the wheels and/or reduce the output power of the engine to keep a safe distance between the vehicle and the preceding vehicle.

The advanced driver assistance system calibration target 111 is configured to correct the advanced driver assistance system sensor of the vehicle. It should be understood that the term "correction" as used herein means that the plane in which the advanced driver assistance system calibration target 111 is located is used as a reference plane for a spatial position of the advanced driver assistance system sensor of the vehicle. Therefore, vehicle positioning can be realized by determining a fourth spatial transformation matrix representing the coordinate transformation from the position of the advanced driver assistance system sensor of the vehicle to the position of the advanced driver assistance system calibration target 111, that is, determining the position of the advanced driver assistance system sensor of the vehicle relative to the position of the reference plane in which the advanced driver assistance system calibration target 111 is located.

In the embodiments of the present application, it should be noted that the position of a lane departure warning calibration target 1111 as shown in FIG. 2 is not an optimal initial position. In order to enable the vehicle to smoothly pass through the rail mechanism 112, as a preferred position, the lane departure warning calibration target 1111 can be placed at the upper left corner of the rail mechanism 112. The position of an adaptive cruise calibration target 1112 as shown in FIG. 2 can be a preferred position because it does not hinder the vehicle from passing through the rail mechanism 112, and if the initial position of the adaptive cruise calibration target 1112 is placed directly in front of the vehicle, it will seriously hinder the vehicle from passing through the rail mechanism 112.

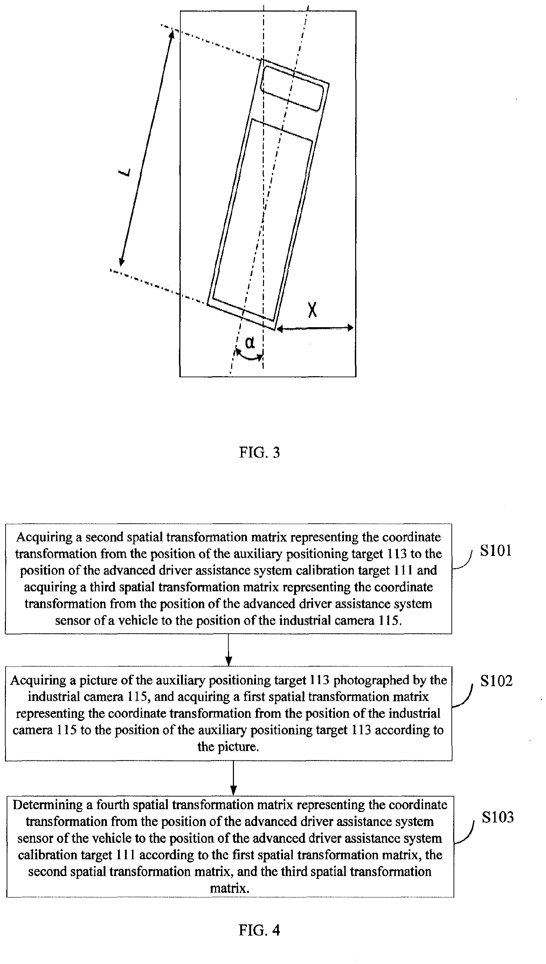

In the embodiments of the present application, the auxiliary positioning target 113 is configured to assist in calibrating a position of the advanced driver assistance system sensor. Preferably, as shown in FIG. 3, the auxiliary positioning target 113 is disposed directly above the extending direction of a vehicle limit rail 117 (i.e., the central line of the station), and the plane in which the auxiliary positioning target 113 is located is substantially parallel to the plane in which the vehicle limit rail 117 is located, correspondingly, the industrial camera 115 is disposed at an upper portion of the vehicle.

It should be noted that the auxiliary positioning target 113 can be installed on the front, rear, upper of the vehicle limit rail 117, even on the ground or other positions according to actual conditions, which is not specifically limited herein, but it should be noted that, regardless of where the auxiliary positioning target 113 is placed, it is sufficient that a spatial transformation matrix between the auxiliary positioning target 113 and the advanced driver assistance system calibration target 111 can be obtained and the industrial camera 115 can photograph the auxiliary positioning target 113. For example, when the auxiliary positioning target 113 is disposed near the head of the vehicle, the industrial camera 115 may also be disposed at a head position of the vehicle to ensure that a picture of the auxiliary positioning target 113 can be photographed. In the embodiments of the present application, the number, model, pixel, and lens of the industrial camera 115 are not specifically limited. For example, for better calibration and positioning, or in order to meet the requirements of the manufacturer, two industrial cameras 115 can be placed on the vehicle, or two targets can be placed.

In the embodiments of the application, preferably, the target is a two-dimensional code. Optionally, the target is a barcode, a picture, an infrared target, a reflective sheet, or the like. For example, the auxiliary positioning target 113 is a two-dimensional code.

In the embodiments of the present application, before the vehicle drives into the station, a second spatial transformation matrix representing the coordinate transformation from the position of the auxiliary positioning target 113 to the position of the advanced driver assistance system calibration target 111 and a third spatial transformation matrix representing the coordinate transformation from the position of the advanced driver assistance system sensor of the vehicle to the position of the industrial camera 115 need to be measured by a certain measurement method. A method of laser ranging is preferred.

The spatial transformation matrix is composed of translation matrix and rotation matrix. The translation matrix is a matrix capable of performing translational transformation on coordinates; the rotation matrix is a matrix capable of performing rotational transformation on coordinates. A point in the scene, by translation and rotation, can be transformed from one coordinate system to another. For example, the spatial transformation matrix between two objects can be obtained by using Zhang Zhengyou calibration algorithm, and also the translation distance and the rotation angle between two objects can be directly measured by measurement tool so as to obtain the spatial transformation matrix.

In the embodiments of the present application, it should be noted that, "in the calibration stage of the advanced driver assistance system, the vehicle is driven into a station to allow a front wheel of the vehicle to reach the position of the vehicle tire measuring grating 116", said process can be realized by the control device 114 to control the vehicle to drive into the station, that is, said process can be automatically realized by the control device 114 with no need for driver to drive; said process can also be realized manually, that is, the driver drives the vehicle to let the vehicle drive into the station.

Here, when the vehicle drives into the station and reaches the designated position in front of the station by means of the automatic control of the control device 114, a radar or a vehicle tire measuring grating 116 may be disposed at a designated position in front of the station (for example, as shown in FIG. 2), so as to determine whether the vehicle has reached the designated front position according to feedback from the radar or the vehicle tire measuring grating 116. It should be understood that, when it is in an automatic control mode, the radar or the vehicle tire measuring grating 116 is respectively connected to the control device 114, and the vehicle is connected with the control device 114. In this way, the control device 114 firstly controls the vehicle to drive into the station, and then controls the vehicle to stop driving when it reaches the designated front position according to feedback from the radar or the vehicle tire measuring grating 116.

Here, when the driver drives the vehicle into the station, in this way, a colored line can be set at a designated position in front of the station, so as to enable the driver to judge whether the vehicle reaches the designated front position according to the indication of the colored line. However, such a mode may not be better than the above-mentioned automatic control mode, because the visual field of the driver is limited, and it is not easy for the driver to see the colored lines when the vehicle is to reach the designated front position.

Here, by limiting the position of the front wheel, it is ensured that the industrial camera 115 can take a picture of the auxiliary positioning target 113. It should be understood that if the position of front wheel of the vehicle is not limited, it is possible that the vehicle is too forward or too rearward, so that the industrial camera 115 cannot take a picture of the auxiliary positioning target 113, thereby the position of the vehicle need to be re-adjusted to enable the industrial camera 115 to take a picture of the auxiliary positioning target 113, which is relatively blind and inefficient.

Further, the system 100 for calibrating an advanced driver assistance system further includes a vehicle limit rail 117 configured for limiting the left-to-right offset of the vehicle. For example, as shown in FIG. 2, after the vehicle travels on the vehicle limit rail 117 along the extending direction (the direction indicated by the black dotted arrow) of the vehicle limit rail 117, in order to prevent excessive left -to-right offset, the vehicle limit rail 117 is configured to limit the left-to-right offset of the vehicle, and finally a maximum left-to-right offset of the vehicle relative to the station is obtained as X, as shown in FIG. 3.

Here, the vehicle limit rail 117 can be imagined as a baffle, and due to the presence of the baffle, the left-to-right offset will not be too large after the vehicle travels on. It should be understood that if the offset is too large, damage may be caused to the vehicle tire measuring grating 116 and the like, and if the offset is too large, it is difficult to ensure that the industrial camera 115 with a previously determined placement position can take a picture of the auxiliary positioning target 113 with a previously determined placement position. Therefore, the vehicle limit rail 117 needs to be placed to limit the left-to-right offset of the vehicle.

In the embodiments of the application, the auxiliary positioning target 113 is configured to assist in calibrating the position of the advanced driver assistance system sensor. Preferably, as shown in FIG. 3, the auxiliary positioning target 113 is disposed directly above the extending direction of the vehicle limit rail 117 (i.e., the central line of the station), and the plane in which the auxiliary positioning target 113 is located is substantially parallel to the plane in which the vehicle limit rail 117 is located, correspondingly, the industrial camera 115 is disposed at an upper portion of the vehicle.

It should be noted that the auxiliary positioning target 113 can be installed on the front, rear, upper of the vehicle limit rail 117, even on the ground or other positions according to actual conditions, which is not specifically limited herein, but it should be noted that, regardless of where the auxiliary positioning target 113 is placed, it is sufficient that a spatial transformation matrix between the auxiliary positioning target 113 and the advanced driver assistance system calibration target 111 can be obtained and the industrial camera 115 can photograph the auxiliary positioning target 113. For example, when the auxiliary positioning target 113 is disposed near the head of the vehicle, the industrial camera 115 may also be disposed at a head position of the vehicle to ensure that a picture of the auxiliary positioning target 113 can be photographed. In the embodiments of the present application, the number, model, pixel, and lens of the industrial camera 115 are not specifically limited. For example, for better calibration and positioning, two industrial cameras 115 can be placed on the vehicle.

In the embodiments of the present application, the advanced driver assistance system sensor is an important component of the advanced driver assistance system. For example, if the advanced driver assistance system is a lane departure warning system, then the advanced driver assistance system sensor is a lane departure warning camera; if the advanced driver assistance system is an adaptive cruise control system, then the advanced driver assistance system sensor is radar.

In the embodiments of the present application, it is assumed that the center point of the auxiliary positioning target 113 is used as the coordinate origin of all reference planes, the second spatial transformation matrix representing the coordinate transformation from the position of the auxiliary positioning target 113 to the position of the advanced driver assistance system calibration target 111 is $_f^j\mathbf{T}$, the first spatial transformation matrix representing the coordinate transformation from the position of the industrial camera 115 to the position of the auxiliary positioning target 113 is $_c^f\mathbf{T}$, and the third spatial transformation matrix representing the coordinate transformation from the position of the advanced driver assistance system sensor of the vehicle to the position of the industrial camera 115 is $_g^c\mathbf{T}$, therefore the fourth spatial transformation matrix representing the coordinate transformation from the position of the advanced driver assistance system sensor of the vehicle to the position of the advanced driver assistance system calibration target 111 can be determined as $_g^j\mathbf{T}$: $_g^j\mathbf{T} = {_f^j}\mathbf{T}\,{_c^f}\mathbf{T}\,{_g^c}\mathbf{T}$. It should be noted that the finally obtained fourth spatial transformation matrix is a 4×4 matrix.

In the embodiments of the present application, the system 100 for calibrating an advanced driver assistance system further includes:
a drive motor configured for controlling the rail mechanism 112.

After determining the fourth spatial transformation matrix representing the coordinate transformation from the position of the advanced driver assistance system sensor of the vehicle to the position of the advanced driver assistance system calibration target 111, the control device 114 is further configured for:
driving the drive motor to control the rail mechanism 112 to change the position of the advanced driver assistance system calibration target 111 by means of translation and rotation according to the fourth spatial transformation matrix, so as to enable the position of the advanced driver assistance system calibration target 111 and the position of the advanced driver assistance system sensor to meet a preset requirement.

In the embodiments of the present application, the preset requirement includes a requirement that the advanced driver assistance system calibration target 111 and the advanced driver assistance system sensor align with each other, for example, the advanced driver assistance system calibration target 111 is located directly in front of the position of the advanced driver assistance system sensor, and the plane in which the advanced driver assistance system calibration target 111 is located is substantially perpendicular to the plane in which the vehicle is located, that is, the central line of the advanced driver assistance system calibration target 111 is the same line as the central line of the advanced driver assistance system sensor.

It should be noted that the preset requirement is mainly to meet the requirements of manufacturer of advanced driver assistance system for correcting the advanced driver assistance system, and most manufacturers require the advanced driver assistance system calibration target 111 and the advanced driver assistance system sensor to align with each other, but some manufacturers may take the actual demand and the actual application scenario of the vehicle into consideration, thereby it is also possible to require the advanced driver assistance system calibration target 111 and the advanced driver assistance system sensor misalign from each other.

In the embodiments of the present application, it should be noted that, generally, after the vehicle positioning is completed, in order to complete the calibration of the vehicle, a mechanically violent manner is adopted to push the vehicle, that is, the vehicle is squeezed and pushed by the mechanical components to make the vehicle align with the target. However, the embodiments of the present application do not adopt such a manner, while, the position of the advanced driver assistance system calibration target 111 is changed by the drive motor, so as to enable the advanced driver assistance system calibration target 111 and the advanced driver assistance system sensor to align with each other, such a manner does not cause any damage to the vehicle, and pushing the vehicle in a mechanically violent manner is difficult to ensure the alignment accuracy of the vehicle and the target. The manner adopted by the embodiments of the present application is to adjust the position of advanced driver assistance system calibration target 111 according to the fourth spatial transformation matrix, so as to enable the position of the advanced driver assistance system calibration target 111 and the advanced driver assistance system sensor to align with each other by a certain translation and rotation, and the precision is higher.

In the embodiments of the present application, before the industrial camera 115 is controlled to take a picture of the auxiliary positioning target 113 so as to obtain the first spatial transformation matrix representing the coordinate transformation from the position of the industrial camera 115 to the position of the auxiliary positioning target 113, an OBD (On Board Diagnostics) adapter is inserted into an OBD interface to obtain calibration status data of the advanced driver assistance system sensor.

The OBD system can not only acquire gas emission data of the vehicle, but also acquire engine data, gearbox data, vehicle speed, fuel consumption data, and the like.

In the embodiments of the present application, specifically, the OBD interface may be an OBD-II interface. By inserting the OBD adapter into the OBD interface, the OBD adapter can acquire calibration status data of the advanced driver assistance system sensor.

The calibration status data includes data reflecting the success of the calibration and data reflecting the failure of the calibration. For example, if the final determined distance, detected by the radar, between the vehicle and the obstacle is within a preset range, the calibration is considered to be successful, otherwise the calibration fails.

After determining the fourth spatial transformation matrix representing the coordinate transformation from the position of the advanced driver assistance system sensor of the vehicle to the position of the advanced driver assistance system calibration target 111, and driving the drive motor, by the control device 114, to control the rail mechanism 112 to change the position of the advanced driver assistance system calibration target 111 by translation and rotation according to the fourth spatial transformation matrix, so as to enable the advanced driver assistance system calibration target 111 and the advanced driver assistance system calibration target 111 and the advanced driver assistance system sensor to align with each other, the calibration status data of the advanced driver assistance system sensor, that is, the calibration failure or calibration success, is obtained to verify whether the calibration of the advanced driver assistance system is completed.

In the embodiments of the present application, as shown in FIG. 2, the system 100 further includes a control box and a control button 118 configured for controlling the control device 114, the control device 114 is configured to be placed inside the control box, and the control button 118 is configured to be placed outside the control box.

In the embodiments of the present application, as shown in FIG. 2, the system 100 further includes a display screen 119, and the display screen 119 is configured to be placed outside the control box. For example, each spatial transformation matrix, vehicle movement distance X (cm), accuracy data, and the like are displayed through the display screen 119.

Embodiment two

FIG. 4 is a schematic view showing an implementation flow of a method for calibrating an advanced driver assistance system based on vehicle positioning according to embodiment two of the present application, which is applied to the control device 114 according to embodiment one of the present application. Details are as follows:

S101, acquiring a second spatial transformation matrix representing the coordinate transformation from the position of the auxiliary positioning target 113 to the position of the advanced driver assistance system calibration target 111 and acquiring a third spatial transformation matrix representing the coordinate transformation from the position of the advanced driver assistance system sensor of a vehicle to the position of the industrial camera 115.

S102, acquiring a picture of the auxiliary positioning target 113 photographed by the industrial camera 115, and acquiring a first spatial transformation matrix representing the coordinate transformation from the position of the industrial camera 115 to the position of the auxiliary positioning target 113 according to the picture.

S103, determining a fourth spatial transformation matrix representing the coordinate transformation from the position of the advanced driver assistance system sensor of the vehicle to the position of the advanced driver assistance system calibration target 111 according to the first spatial transformation matrix, the second spatial transformation matrix, and the third spatial transformation matrix.

In the solution mentioned above, firstly, the second spatial transformation matrix representing the coordinate transformation from the position of the auxiliary positioning target 113 to the position of the advanced driver assistance system calibration target 111 and the third spatial transformation matrix representing the coordinate transformation from the position of the advanced driver assistance system sensor of the vehicle to the position of the industrial camera 115 are obtained, then the picture of auxiliary positioning target 113 photographed by the industrial camera 115 is obtained, and the first spatial transformation matrix representing the coordinate transformation from the position of the industrial camera 115 to the position of the auxiliary positioning target 113 is obtained according to the picture; finally, the fourth spatial transformation matrix representing the coordinate transformation from the position of the advanced driver assistance system sensor of the vehicle to the position of the advanced driver assistance system calibration target 111 is determined according to the first spatial transformation matrix, the second spatial transformation matrix, and the third spatial transformation matrix. It can be seen that, by the above manner, the fourth spatial transformation matrix representing the coordinate transformation from the position of the advanced driver assistance system sensor of the vehicle to the position of the advanced driver assistance system calibration target 111 is obtained, thereby realizing the positioning of the vehicle.

In the embodiments of the present application, after determining, in the step S103, the fourth spatial transformation matrix representing the coordinate transformation from the position of the advanced driver assistance system sensor of the vehicle to the position of the advanced driver assistance system calibration target 111, the method further includes:
driving the drive motor, by the control device 114, to control the rail mechanism 112 to change the position of the advanced driver assistance system calibration target 111 by translation and rotation according to the fourth spatial transformation matrix, so as to enable the position of the advanced driver assistance system calibration target 111 and the position of the advanced driver assistance system sensor to meet a preset requirement.

In the embodiments of the present application, the acquiring the picture of the auxiliary positioning target 113 photographed by the industrial camera 115, as described in step S102, includes:
acquiring a picture of the auxiliary positioning target 113 photographed by an industrial camera 115 disposed at an upper portion of the vehicle.

It should be noted that the method for calibrating an advanced driver assistance system based on vehicle positioning proposed in embodiment two of the present application and the system for calibrating an advanced driver assistance system based on vehicle positioning proposed in embodiment one of the present application are based on the same inventive concept, the corresponding technical contents in the method embodiment and the system embodiment can be applied to each other, which will not be described in detail herein.

Those of ordinary skill in the art will appreciate that the units and algorithm steps of the various examples described in connection with the embodiments disclosed herein can be implemented in electronic hardware, computer software, or a combination of both, in order to clearly illustrate the interchangeability of hardware and software, the composition and steps of the various examples have been generally described in terms of function in the above description. Whether these functions are performed in hardware or software depends on the specific application and design constraints of the technical solution. Those skilled in the art can use different methods for implementing the described functions for each particular application within the scope defined by the appended claims.

Those skilled in the art can clearly understand that, for the convenience and brevity of the description, the specific working process of the apparatus and units described above may refer to the corresponding process in the aforesaid method embodiment, and details are not described herein again.

In the several embodiments provided by the present application, it should be understood that the disclosed apparatus and method can be implemented in other manners. For example, the apparatus embodiments described above are merely illustrative, for example, the division of the units is only a logical function division, there may be other division manners in actual implementation, for example, multiple units or parts may be combined or can be integrated into another system, or some features can be ignored or not executed. In addition, the mutual coupling, direct coupling or communication connection shown or discussed may be indirect coupling or communication connection through some interface, apparatus or unit, the connection can be electrical, mechanical or in other form.

The units described as separation components may or may not be physically separated, and the components displayed as units may or may not be physical units, that is, may be located in one place, or may be distributed to multiple network units. Some or all of the units may be selected according to actual needs to achieve the objectives of the embodiments of the present application.

In addition, each functional unit in each embodiment of the present application may be integrated into one processing unit, or each unit may exist physically separately, or two or more units may be integrated into one unit. The above integrated unit can be implemented in the form of hardware or in the form of a software functional unit.

The integrated unit, if implemented in the form of a software functional unit and sold or used as a standalone product, may be stored in a computer readable storage medium. According to such understanding, the technical solution of the present application in essence, in other words, the part contributing to the prior art, or all or part of the technical solution may be embodied in the form of a software product, the computer software product stored in a storage medium includes a number of instructions so as to enable a computer device (which may be a personal computer, server, or network device, etc.) to perform all or part of the steps of the methods described in various embodiments of the present application. The aforesaid storage medium includes: a U disk, a mobile hard disk, a read-only memory (ROM), a random access memory (RAM), a magnetic disk, or an optical disk, and the like, which can store program codes.

**Claims**

1. A system (100) for calibrating an advanced driver assistance system based on vehicle positioning, comprising:

   an advanced driver assistance system calibration target (111), a rail mechanism (112) for the advanced driver assistance system calibration target (111), an auxiliary positioning target (113), a control device (114), and an industrial camera (115);
   wherein
   the advanced driver assistance system calibration target (111) is configured to correct an advanced driver assistance system sensor of a vehicle; the rail mechanism (112) is configured to control a translational movement and a rotational movement of the advanced driver assistance system calibration target (111); the auxiliary positioning target (113) is configured to assist in calibrating a position of the advanced driver assistance system sensor; the control device (114) is configured to control operation of the system (100); and the industrial camera (115) is configured to photograph the auxiliary positioning target (113);
   **characterized in that**
   the industrial camera (115) is configured to be placed at an upper portion of the vehicle; and in a calibration stage of the advanced driver assistance system, the vehicle is driven into a station to allow a front wheel of the vehicle to reach a designated front position at the same time; the control device (114) is configured to control the industrial camera (115) to take a picture of the auxiliary positioning target (113) to obtain a first spatial transformation matrix representing the coordinate transformation from the position of the industrial camera (115) to the position of the auxiliary positioning target (113), so as to determine a fourth spatial transformation matrix representing the coordinate transformation from the position of the advanced driver assistance system sensor of the vehicle to the position of the advanced driver assistance system calibration target (111) according to the first spatial transformation matrix, a second spatial transformation matrix representing the coordinate transformation from the position of the auxiliary positioning target (113) to the position of the advanced driver assistance system calibration target (111), and a third spatial transformation matrix representing the coordinate transformation from the position of the advanced driver assistance system sensor of the vehicle to the position of the industrial camera (115).

2. The system (100) according to claim 1, further comprising:

   a drive motor configured for controlling the rail mechanism (112);
   wherein
   after determining the fourth spatial transformation matrix representing the coordinate transformation from the position of the advanced driver assistance system sensor of the vehicle to the position of the advanced driver assistance system calibration target (111), the control device (114) is further configured for:

driving the drive motor to control the rail mechanism (112) to change the position of the advanced driver assistance system calibration target (111) by means of translation and rotation according to the fourth spatial transformation matrix, so as to enable the position of the advanced driver assistance system calibration target (111) and the position of the advanced driver assistance system sensor to meet a preset requirement.

3. The system (100) according to claim 2, wherein an OBD (On Board Diagnostics) adapter is inserted into an OBD interface to obtain calibration status data of the advanced driver assistance system sensor before the industrial camera (115) is controlled to take a picture of the auxiliary positioning target (113) so as to obtain the first spatial transformation matrix representing the coordinate transformation from the position of the industrial camera (115) to the position of the auxiliary positioning target (113).

4. The system (100) according to claim 1, further comprising a vehicle limit rail (117) configured for limiting a left-to-right offset of the vehicle, wherein the auxiliary positioning target (113) is disposed directly above an extending direction of the vehicle limit rail (117).

5. The system (100) according to any one of claims 1 to 4, wherein the advanced driver assistance system calibration target (111) is a lane departure warning calibration target (1111).

6. The system (100) according to any one of claims 1 to 4, wherein the advanced driver assistance system calibration target (111) is an adaptive cruise calibration target (1112).

7. The system (100) according to any one of claims 1 to 4, further comprising a control box and a control button (118) configured for controlling the control device (114), wherein the control device (114) is configured to be placed inside the control box, and the control button (118) is configured to be placed outside the control box.

8. The system (100) according to claim 7, further comprising a display screen (119) configured to be placed outside the control box.

9. A method for calibrating an advanced driver assistance system, using the system (100) according to any of claims 1-8, comprising the following steps:

acquiring a second spatial transformation matrix representing the coordinate transformation from the position of the auxiliary positioning target (113) to the position of the advanced driver assistance system calibration target (111), and acquiring a third spatial transformation matrix representing the coordinate transformation from the position of an advanced driver assistance system sensor of a vehicle to the position of the industrial camera (115);

acquiring a picture of the auxiliary positioning target (113) photographed by the industrial camera (115), and acquiring a first spatial transformation matrix representing the coordinate transformation from the position of the industrial camera (115) to the position of the auxiliary positioning target (113) according to the picture; and

determining a fourth spatial transformation matrix representing the coordinate transformation from the position of the advanced driver assistance system sensor of the vehicle to the position of the advanced driver assistance system calibration target (111) according to the first spatial transformation matrix, the second spatial transformation matrix, and the third spatial transformation matrix.

10. The method according to claim 9, after determining the fourth spatial transformation matrix representing the coordinate transformation from the position of the advanced driver assistance system sensor of the vehicle to the position of the advanced driver assistance system calibration target (111), further comprising:

driving, by the control device (114), the drive motor to control the rail mechanism (112) to change a position of the advanced driver assistance system calibration target (111) by means of translation and rotation according to the fourth spatial transformation matrix, so as to enable the position of the advanced driver assistance system calibration target (111) and the position of the advanced driver assistance system sensor to meet a preset requirement.

**Patentansprüche**

1. System (100) zur Kalibrierung eines Fahrerassistenzsystems (Advanced Driver Assistance System) auf Basis einer Fahrzeugpositionierung, das aufweist:

ein Fahrerassistenzsystem-Kalibrierungsziel (111), einen Schienenmechanismus (112) für das Fahrerassistenzsystem-Kalibrierungsziel (111), ein Hilfspositionierungsziel (113), eine Steuereinrichtung (114) und eine Industriekamera (115);

wobei

das Fahrerassistenzsystem-Kalibrierungsziel (111) dazu ausgebildet ist, einen Fahrerassistenzsystem-Sensor eines Fahrzeugs zu korrigieren;

der Schienenmechanismus (112) dazu ausgebildet ist, eine translatorische Bewegung und eine rotative Bewegung des Fahrerassistenzsystem-Kalibrierungsziels (111) zu steuern;

das Hilfspositionierungsziel (113) dazu ausgebildet ist, bei der Kalibrierung einer Position des Fahrerassistenzsystem-Sensors zu helfen;

die Steuereinrichtung (114) dazu ausgebildet ist, den Betrieb des Systems (100) zu steuern; und

die Industriekamera (115) dazu ausgebildet ist, das Hilfspositionierungsziel (113) zu fotografieren;

**dadurch gekennzeichnet, dass**

die Industriekamera (115) dazu ausgebildet ist, an einem oberen Abschnitt des Fahrzeugs platziert zu sein; und

das Fahrzeug in einem Kalibrierungszustand des Fahrerassistenzsystems in eine Station gefahren wird, damit ein Vorderrad des Fahrzeugs gleichzeitig eine bestimmte vordere Position erreichen kann; wobei die Steuereinrichtung (114) dazu ausgebildet ist, die Industriekamera (115) zu steuern, damit diese ein Bild des Hilfspositionierungsziels (113) aufnimmt, um eine erste räumliche Transformationsmatrix zu erhalten, welche die Koordinatentransformation von der Position der Industriekamera (115) zu der Position des Hilfspositionierungsziels (113) darstellt, so dass eine vierte räumliche Transformationsmatrix bestimmt wird, welche die Koordinatentransformation von der Position des Fahrerassistenzsystem-Sensors des Fahrzeugs zu der Position des Fahrerassistenzsystem-Kalibrierungsziels (111) entsprechend der ersten räumlichen Transformationsmatrix darstellt, eine zweite räumliche Transformationsmatrix bestimmt wird, welche die Koordinatentransformation von der Position des Hilfspositionierungsziels (113) zu der Position des Fahrerassistenzsystem-Kalibrierungsziels (111) darstellt, und eine dritte räumliche Transformationsmatrix bestimmt wird, welche die Koordinatentransformation von der Position des Fahrerassistenzsystem-Sensors des Fahrzeugs zu der Position der Industriekamera (115) darstellt.

2.  System (100) nach Anspruch 1, das ferner aufweist:

einen Antriebsmotor, der dazu ausgebildet ist, den Schienenmechanismus (112) zu steuern; wobei

nach dem Bestimmten der vierten räumlichen Transformationsmatrix, welche die Koordinatentransformation von der Position des Fahrerassistenzsystem-Sensors des Fahrzeugs zu der Position des Fahrerassistenzsystem-Kalibrierungsziels (111) darstellt, die Steuereinrichtung (114) ferner für Folgendes ausgebildet ist: Antreiben des Antriebsmotors zur Steuerung des Schienenmechanismus (112), um die Position des Fahrerassistenzsystem-Kalibrierungsziels (111) mittels Translation und Rotation entsprechend der vierten räumlichen Transformationsmatrix zu ändern, so dass die Position des Fahrerassistenzsystem-Kalibrierungsziels (111) und die Position des Fahrerassistenzsystem-Sensors eine vorgegebene Anforderung erfüllen können.

3.  System (100) nach Anspruch 2, wobei ein OBD-(On-Board-Diagnose)-Adapter in eine OBD-Schnittstelle eingesetzt ist, um Daten zum Kalibrierungsstatus des Fahrerassistenzsystem-Sensors zu erhalten, bevor die Industriekamera (115) gesteuert wird, um ein Bild des Hilfspositionierungsziels (113) aufzunehmen, so dass die erste räumliche Transformationsmatrix erhalten wird, welche die Koordinatentransformation von der Position der Industriekamera (115) zu der Position des Hilfspositionierungsziels (113) darstellt.

4.  System (100) nach Anspruch 1, das ferner eine Fahrzeugbegrenzungsschiene (117) aufweist, die so ausgebildet ist, dass sie eine von links nach rechts verlaufende Verschiebung des Fahrzeugs begrenzt, wobei das Hilfspositionierungsziel (113) direkt oberhalb einer Erstreckungsrichtung der Fahrzeugbegrenzungsschiene (117) angeordnet ist.

5.  System (100) nach einem der Ansprüche 1 bis 4, wobei das Fahrerassistenzsystem-Kalibrierungsziel (111) ein Spurverlassenswarnung-Kalibrierungsziel (1111) ist.

6.  System (100) nach einem der Ansprüche 1 bis 4, wobei das Fahrerassistenzsystem-Kalibrierungsziel (111) ein Adaptive-Cruise-Kalibrierungsziel (1112) ist.

7.  System (100) nach einem der Ansprüche 1 bis 4, das ferner einen Steuerkasten und einen Steuerknopf (118) aufweist, die zur Steuerung der Steuereinrichtung (114) ausgebildet sind, wobei die Steuereinrichtung (114) so ausgebildet ist, dass sie in dem Steuerkasten platziert ist, und der Steuerknopf (118) so ausgebildet ist, dass er außerhalb des Steuerkastens platziert ist.

8.  System (100) nach Anspruch 7, das ferner einen Anzeigebildschirm (119) aufweist, der so ausgebildet ist, dass er außerhalb des Steuerkastens platziert ist.

9. Verfahren zur Kalibrierung eines Fahrerassistenzsystems unter Verwendung des Systems (100) nach einem der Ansprüche 1-8, das die folgenden Schritte umfasst:

Erfassen einer zweiten räumlichen Transformationsmatrix, welche die Koordinatentransformation von der Position des Hilfspositionierungsziels (113) zu der Position des Fahrerassistenzsystem-Kalibrierungsziels (111) darstellt, und Erfassen einer dritten räumlichen Transformationsmatrix, welche die Koordinatentransformation von der Position eines Fahrerassistenzsystem-Sensors eines Fahrzeugs zu der Position der Industriekamera (115) darstellt;
Erfassen eines Bildes des Hilfspositionierungsziels (113), das von der Industriekamera (115) fotografiert wird, und Erfassen einer ersten räumlichen Transformationsmatrix, welche die Koordinatentransformation von der Position der Industriekamera (115) zu der Position des Hilfspositionierungsziels (113) entsprechend dem Bild darstellt; und
Bestimmen einer vierten räumlichen Transformationsmatrix, welche die Koordinatentransformation von der Position des Fahrerassistenzsystem-Sensors des Fahrzeugs zu der Position des Fahrerassistenzsystem-Kalibrierungsziels (111) entsprechend der erste räumlichen Transformationsmatrix, der zweite räumlichen Transformationsmatrix und der dritten räumlichen Transformationsmatrix darstellt.

10. Verfahren nach Anspruch 9, das nach dem Bestimmen der vierten räumlichen Transformationsmatrix, welche die Koordinatentransformation von der Position des Fahrerassistenzsystem-Sensors des Fahrzeugs zu der Position des Fahrerassistenzsystem-Kalibrierungsziels (111) darstellt, ferner umfasst:
Antreiben, durch die Steuereinrichtung (114), des Antriebsmotors zur Steuerung des Schienenmechanismus (112), um eine Position des Fahrerassistenzsystem-Kalibrierungsziels (111) mittels Translation und Rotation entsprechend der vierten räumlichen Transformationsmatrix zu ändern, so dass die Position des Fahrerassistenzsystem-Kalibrierungsziels (111) und die Position des Fahrerassistenzsystem-Sensors eine vorgegebene Anforderung erfüllen können.

## Revendications

1. Système (100) d'étalonnage d'un système d'assistance à la conduite avancé sur la base du positionnement du véhicule, comprenant :

une cible d'étalonnage du système d'assistance à la conduite avancé (111), un mécanisme de rail (112) pour la cible d'étalonnage du système d'assistance à la conduite avancé (111), une cible de positionnement auxiliaire (113), un dispositif de commande (114) et une caméra industrielle (115) ;
dans lequel
la cible d'étalonnage du système d'assistance à la conduite avancé (111) est configurée pour corriger un capteur de système d'assistance à la conduite avancé d'un véhicule ; le mécanisme de rail (112) est configuré pour commander un mouvement de translation et un mouvement de rotation de la cible d'étalonnage du système d'assistance à la conduite avancé (111) ; la cible de positionnement auxiliaire (113) est configurée pour aider à l'étalonnage d'une position du capteur du système d'assistance à la conduite avancé ; le dispositif de commande (114) est configuré pour commander le fonctionnement du système (100) ; et la caméra industrielle (115) est configurée pour photographier la cible de positionnement auxiliaire (113) ;
**caractérisé en ce que**
la caméra industrielle (115) est conçue pour être placée sur une partie supérieure du véhicule ; et
dans une étape d'étalonnage du système d'assistance à la conduite avancé, le véhicule est entraîné dans une station pour permettre à une roue avant du véhicule d'atteindre une position avant désignée en même temps ; le dispositif de commande (114) est configuré pour commander la caméra industrielle (115) afin de prendre une photo de la cible de positionnement auxiliaire (113) afin d'obtenir une première matrice de transformation spatiale représentant la transformation de coordonnées de la position de la caméra industrielle (115) à la position de la cible de positionnement auxiliaire (113), de manière à déterminer une quatrième matrice de transformation spatiale représentant la transformation de coordonnées de la position du capteur du système d'assistance à la conduite avancé du véhicule à la position de la cible d'étalonnage du système d'assistance à la conduite avancé (111) selon la première matrice de transformation spatiale, une deuxième matrice de transformation spatiale représentant la transformation de coordonnées de la position de la cible de positionnement auxiliaire (113) à la position de la cible d'étalonnage du système d'assistance à la conduite avancé (111), et une troisième matrice de transformation spatiale représentant la transformation de coordonnées à partir de la position du capteur du système d'assistance à la conduite avancé du véhicule à la position de la caméra industrielle (115).

2. Système (100) selon la revendication 1, comprenant en outre :

un moteur d'entraînement configuré pour commander le mécanisme à rail (112) ;
dans lequel
après avoir déterminé la quatrième matrice de transformation spatiale représentant la transformation de coordonnées de la position du capteur du système d'assistance à la conduite avancé du véhicule à la position de la cible d'étalonnage du système d'assistance à la conduite avancé (111), le dispositif de commande (114) est en outre configuré pour :
entraîner le moteur d'entraînement à commander le mécanisme de rail (112) afin de changer la position de la cible d'étalonnage du système d'assistance à la conduite avancé (111) au moyen d'une translation et d'une rotation selon la quatrième matrice de transformation spatiale, de manière à permettre la position de la cible d'étalonnage du système d'assistance à la conduite avancé (111) et la position du capteur du système d'assistance à la conduite avancé pour répondre à une exigence prédéfinie.

3. Système (100) selon la revendication 2, dans lequel un adaptateur OBD (diagnostic embarqué) est inséré dans une interface OBD pour obtenir des données d'état d'étalonnage du capteur du système d'assistance à la conduite avancé avant que la caméra industrielle (115) ne soit commandée pour prendre une image de la cible de positionnement auxiliaire (113) de manière à obtenir la première matrice de transformation spatiale représentant la transformation de coordonnées de la position de la caméra industrielle (115) à la position de la cible de positionnement auxiliaire (113).

4. Système (100) selon la revendication 1, comprenant en outre un rail de limite de véhicule (117) conçu pour limiter un décalage de gauche à droite du véhicule, la cible de positionnement auxiliaire (113) étant disposée directement au-dessus d'une direction d'extension de rail de limite (117) du véhicule.

5. Système (100) selon l'une quelconque des revendications 1 à 4, dans lequel la cible d'étalonnage du système d'assistance à la conduite avancé (111) est une cible d'étalonnage d'avertissement de sortie de voie (1111).

6. Système (100) selon l'une quelconque des revendications 1 à 4, dans lequel la cible d'étalonnage du système d'assistance à la conduite avancé (111) est une cible d'étalonnage de croisière adaptative (1112).

7. Système (100) selon l'une quelconque des revendications 1 à 4, comprenant en outre un boîtier de commande et un bouton de commande (118) configurés pour commander le dispositif de commande (114), dans lequel le dispositif de commande (114) est configuré pour être placé à l'intérieur du boîtier de commande, et le bouton de commande (118) est conçu pour être placé à l'extérieur du boîtier de commande.

8. Système (100) selon la revendication 7, comprenant en outre un écran d'affichage (119) configuré pour être placé à l'extérieur du boîtier de commande.

9. Procédé d'étalonnage d'un système d'assistance à la conduite avancé, utilisant le système (100) selon l'une quelconque des revendications 1 à 8, comprenant les étapes suivantes :

l'acquisition d'une deuxième matrice de transformation spatiale représentant la transformation de coordonnées de la position de la cible de positionnement auxiliaire (113) à la position de la cible d'étalonnage du système d'assistance à la conduite avancé (111), et l'acquisition d'une troisième matrice de transformation spatiale représentant la transformation de coordonnées à partir de la position d'un capteur de système d'assistance à la conduite avancé d'un véhicule à la position de la caméra industrielle (115) ;
l'acquisition d'une image de la cible de positionnement auxiliaire (113) photographiée par la caméra industrielle (115), et l'acquisition d'une première matrice de transformation spatiale représentant la transformation de coordonnées de la position de la caméra industrielle (115) à la position de la cible de positionnement auxiliaire (113) selon l'image ; et
la détermination d'une quatrième matrice de transformation spatiale représentant la transformation de coordonnées de la position du capteur de système d'assistance à la conduite avancé du véhicule à la position de la cible d'étalonnage du système d'assistance à la conduite avancé (111) selon la première matrice de transformation spatiale, la deuxième matrice de transformation spatiale, et la troisième matrice de transformation spatiale.

10. Procédé selon la revendication 9, après détermination de la quatrième matrice de transformation spatiale représentant la transformation de coordonnées de la position du capteur du système d'assistance à la conduite avancé du véhicule à la position de la cible d'étalonnage du système d'assistance à la conduite avancé (111), comprenant en outre :
l'entraînement, par le dispositif de commande (114), du moteur d'entraînement pour commander le mécanisme à rail (112) afin de changer une position de la cible d'étalonnage du système d'assistance à la conduite avancé (111) au moyen d'une translation et d'une rotation selon la quatrième matrice de transformation spatiale, de manière à permettre à la position de la cible d'étalonnage du système d'assistance à la conduite avancé (111) et à la position du capteur du système d'assistance à la conduite avancé de répondre à une exigence prédéfinie.

FIG. 1

FIG. 2

FIG. 3

| |
|---|
| Acquiring a second spatial transformation matrix representing the coordinate transformation from the position of the auxiliary positioning target 113 to the position of the advanced driver assistance system calibration target 111 and acquiring a third spatial transformation matrix representing the coordinate transformation from the position of the advanced driver assistance system sensor of a vehicle to the position of the industrial camera 115. |

S101

| |
|---|
| Acquiring a picture of the auxiliary positioning target 113 photographed by the industrial camera 115, and acquiring a first spatial transformation matrix representing the coordinate transformation from the position of the industrial camera 115 to the position of the auxiliary positioning target 113 according to the picture. |

S102

| |
|---|
| Determining a fourth spatial transformation matrix representing the coordinate transformation from the position of the advanced driver assistance system sensor of the vehicle to the position of the advanced driver assistance system calibration target 111 according to the first spatial transformation matrix, the second spatial transformation matrix, and the third spatial transformation matrix. |

S103

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010238291 A1

- US 9279670 B2